# EUROPEAN PATENT APPLICATION

(11) **EP 4 293 609 A1**
(43) Date of publication of application: **20.12.2023**
(21) Application number: 22752847.8
(22) Date of filing: 10.02.2022
(51) Int. Cl.: G06Q 50/18

(54) **PROCEDURE REQUESTING SYSTEM, PROCEDURE REQUESTING METHOD, AND PROGRAM**

(30) Priority: 10.02.2021 JP 2021020275
(71) Applicant: Aipco, Inc., Tsukuba-shi, Ibaraki 305-0031 (JP)
(72) Inventor: TANIMIZU, Koichi, Tsukuba-shi, Ibaraki 305-0031 (JP); HIRUKAWA, Kosuke, Tsukuba-shi, Ibaraki 305-0031 (JP); KUDO, Yusuke, Tsukuba-shi, Ibaraki 305-0031 (JP)
(74) Representative: Schön, Christoph
(86) International application number: PCT/JP2022/005508
(87) International publication number: WO 2022/173025

(57) **Abstract**

An object of the present invention is to provide a procedure requesting system, a procedure requesting method, and a program that allows a user who desires a procedure with an intellectual property office for filing an application for, registering, or maintaining rights to intellectual property to easily select an agent and make a procedure request. In order to achieve the object, a procedure requesting system, a procedure requesting method, and a program are provided. The procedure requesting system includes an information processing unit, which is used by the user who desires a procedure with an intellectual property office for making a procedure request to an agent and includes an agent information storage unit in which information on an agent is registered, and procedure requesting means by which the user requests the procedure by an agent registered in the agent information storage unit. This enables the user to make a procedure request to the agent registered in advance in a procedure with an intellectual property office. As a result, the procedure request to an agent can be made much more easily than for the user to find an agent by him/herself and make a request.

## Description

### TECHNICAL FIELD

The present invention relates to a procedure requesting system, a procedure requesting method, and a program. In particular, the present invention relates to a procedure requesting system, a procedure requesting method, and a program for conducting a procedure with an intellectual property office.

### BACKGROUND ART

Generally, in a process pertaining to the acquisition of an intellectual property right, various procedures need to be conducted with intellectual property offices as agencies in respective countries that conduct an examination and grant registration of the intellectual property. Examples of the procedures include paying various fees that need to be paid to intellectual property offices within predetermined time limits, preparing and filing various documents related to the application of intellectual property, and the like.

In the procedures with intellectual property offices, since inadequacies of the procedures lead to a loss of an opportunity to acquire an intellectual property right or a lapse of a right, these procedures need to be reliably conducted within predetermined time limits. Therefore, it has become common for a person who wants to acquire an intellectual property right to make a request to an agent who has sufficient knowledge and skill related to the procedures in the process pertaining to the acquisition of intellectual property rights to conduct the procedures with an intellectual property office.

In addition, a system mediating between a requester and an agent in the procedures with intellectual property offices is being developed.

For example, Patent Document 1 discloses a system pertaining to procedure management that mediates information exchange between a requester and an agent in procedures related to intellectual property rights, such as application procedures for patents and trademarks, by sending and receiving information on the procedures in order for the requester to swiftly and accurately manage the information on the procedures by the agent who receives a request from the requester.
Patent Document 1: JP-A-9-91349

### DISCLOSURE OF THE INVENTION

### PROBLEMS TO BE SOLVED BY THE INVENTION

As disclosed in Patent Document 1, a mediation system for obtaining information on the procedures with an intellectual property office, which a requester (such as the inventor, deviser, or applicant (right holder) of intellectual property) requests from an agent, is known.

On the other hand, conventional mediation systems assume that the requester and the agent have established a certain degree of trust relationship, such as, already being acquainted with one another or having a request track record. The conventional mediation systems have a strong implication as an auxiliary tool for exchanging the information of the procedures with intellectual property offices, contents related to intellectual property rights, and the like between a specific requester and a specific agent. That is, a requester or an agent each establishes a mediation system and registers agents or requesters with whom each has business with in the mediation system of his/her own. Accordingly, such a mediation system is often customized to fit the demands of a requester and is not a general-purpose system that other requesters can casually utilize. In view of this, problems arise as to various settings, operating conditions, and the like of the system being constrained to a certain extent and a development cost and the like increasing.

Further, when a person who is not acquainted with or does not have a request track record with an agent wants to file an application for, register, or maintain rights to intellectual property and thinks of making a request to an agent who specializes in handling intellectual property, first, finding an agent to request a procedure itself becomes a significant burden. In particular, when a procedure needs to be conducted with an intellectual property office in a foreign country to the requester, finding a person who may become an agent abroad requires a huge amount of labor by the requester. In addition, when the acquisition of intellectual property rights in a plurality of countries is desired, an agent will be found in each country, therefore further increasing labor by the requester.

In view of this, a matching system is required for a requester who desires a procedure with an intellectual property office to be able to easily find an agent as a specialist in the procedure with the intellectual property office. Further, a means that allows the requester to easily make a procedure request to the agent is required. Examples of the means include, for example, a system and a method that allows a requester who becomes a user to receive assistance in selection of an agent from whom a procedure with an intellectual property office is requested and the procedure request. In particular, a system and a method that a user can easily operate are required even when the user him/herself does not have detailed knowledge of the procedure with intellectual property offices or a connection with a specific agent.

An object of the present invention is to provide a procedure requesting system, a procedure requesting method, and a program that allows a user who desires a procedure with an intellectual property office for filing an application for, registering, or maintaining rights to intellectual property to easily select an agent and make a procedure request.

### SOLUTIONS TO THE PROBLEMS

The inventor conducted extensive studies on the above-described problems and found the following. In a procedure with an intellectual property office, by providing a function to enable a procedure request from a user to a plurality of agents whose information is preliminarily registered, labor involved in finding an agent by the user him/herself can be reduced, and the user can easily make a procedure request with an intellectual property office to the agent. Thus, the inventor completed the present invention.

That is, the present invention is a procedure requesting system, a procedure requesting method, and a program as described below.

In order to solve the above-described problem, a procedure requesting system of the present invention is for a user who desires a procedure to request a procedure by an agent in a procedure with an intellectual property office. The procedure requesting system includes an information processing unit and procedure requesting means. The information processing unit includes an agent information storage unit in which information on an agent is registered. The user requests a procedure by an agent registered in the agent information storage unit by the procedure requesting means.

The procedure requesting system of the present invention allows the introduction of agents to a user and mediation of a procedure request by providing means by which a user makes a procedure request to an agent whose information is preliminarily registered.

This enables the user to make a procedure request to the agent who is registered in advance via the system in a procedure with an intellectual property office. As a result, the procedure request to an agent can be made much more easily than for the user to find an agent by him/herself and make a request. In particular, when the user him/herself does not have detailed knowledge of the procedure with intellectual property offices or when the user does not have a connection with a specific agent, the effects of the present invention are further exerted.

Further, preliminarily registering an agent in the agent information storage unit makes it easier for the agent to catch the eye of the user who desires a procedure with an intellectual property office, allowing the agent to obtain an opportunity to acquire a customer.

An embodiment of the procedure requesting system of the present invention has a feature in which the information processing unit includes a user information storage unit in which information on the user is registered.

The feature ensures the building of a trust relationship between a system administration side and the user in addition to the building of a trust relationship between the user and an agent by registering the information on the user. This enables the agent side to obtain information on the user from whom a procedure request is received and ensures a stable system operation for the system administration side.

An embodiment of the procedure requesting system of the present invention has a feature in which browsing means by which the user browses agent information registered in the agent information storage unit is included.

The feature allows the user him/herself to acquire the information of registered agents, ensuring obtaining a determination criterion for the user him/herself to select an agent to whom a procedure request is made. This enables the user him/herself to appropriately and easily select an agent who fulfills the demands from the user side in the procedure with an intellectual property office and make a procedure request.

An embodiment of the procedure requesting system of the present invention has a feature in which information registered in the agent information storage unit includes information on evaluation for the agent.

The feature allows adding the evaluation for agents as one item pertaining to the determination criterion for the user him/herself to select an agent, ensuring selecting a more appropriate agent for the user him/herself and make a procedure request.

An embodiment of the procedure requesting system of the present invention has a feature in which an agent automatic selection unit that automatically selects an agent from among agents registered in the agent information storage unit is included, and the agent automatic selection unit selects an appropriate agent based on a procedure request content of the user via the procedure requesting means and information on agents registered in the agent information storage unit.

The feature enables the system side to automatically select an appropriate agent without the user him/herself directly selecting an agent, therefore ensuring a reduction in the user's workload related to the selection of an agent. In particular, even a user unfamiliar with a request itself to an agent can easily make a procedure request.

An embodiment of the procedure requesting system of the present invention has a feature in which the agent has an authority that allows a procedure with an intellectual property office in a foreign country to the user.

The feature ensures easily selecting an agent who has a necessary authority and making a procedure request even when the user wants to acquire an intellectual property right outside his/her own country.

An embodiment of the procedure requesting system of the present invention has a feature in which the information processing unit includes translating means for supporting a plurality of languages in registration and display of information.

The feature allows the user to understand the information of an agent and easily make a procedure request even when the language mainly used or language understandable by the user does not coincide with that by the agent. Further, the agent side can receive a request from a foreign user and appropriately respond to the request.

An embodiment of the procedure requesting system of the present invention has a feature in which the translating means includes a translation agent information storage unit and translation requesting means. In the translation agent storage unit, information on a translation agent is registered. By the translation requesting means, the user browses information on a translation agent registered in the translation agent information storage unit, makes a selection, and requests a translation.

The feature enables the user to select a translation agent who carries out translation based on the registered information and request translation. This ensures selecting a translation agent and making a request more easily than for the user him/herself to find a translation agent who has necessary and sufficient ability for a procedure with an intellectual property office.

An embodiment of the procedure requesting system of the present invention has a feature in which information registered in the translation agent information storage unit includes information on evaluation for the translation agent.

The feature allows adding the evaluation for translation agents as one item pertaining to the determination criterion for the user him/herself to select a translation agent, ensuring selecting a more appropriate translation agent for the user him/herself and make a request.

An embodiment of the procedure requesting system of the present invention has a feature in which a fee receiving unit that receives various fees from the user is included, and the procedure requesting means executes a procedure request made by the user after the fee receiving unit receives various fees.

The feature ensures a stable operation of the system and facilitation of agent work without the system administration side or agent side taking care of payment for various fees by first receiving various fees from the user and then making a procedure request executable.

An embodiment of the procedure requesting system of the present invention has a feature in which the fee receiving unit includes a fee allocating unit and payment means. The fee allocating unit allocates various fees received from the user to a system usage fee and an amount equivalent to payment to the agent to whom the procedure requesting means makes a request. By the payment means, the amount equivalent to payment is sent to the agent.

The feature allows the user to pay the fee for the procedure request that should be paid to the agent and the fee for the usage of the system in one payment by allocating the various fees received from the user to the system usage fee and the amount equivalent to payment to the agent on the system administration side and sending the payment of to the agent, ensuring a reduction in workload related to the payment. Meanwhile, the system administration side can receive a necessary expense more reliably, allowing a more stable operation of the system. Further, since billing and collecting the necessary expense are taken over by the system side, the agent side can reduce the workload related to the agent work and smoothly conduct a procedure for a case.

An embodiment of the procedure requesting system of the present invention has a feature in which instruction means by which payment for various fees to the fee receiving unit and a procedure request to the agent by the user are instructed in one operation is included.

The feature enables the user to complete a procedure request to the agent through an easy operation. This can reduce the workload of the user him/herself tremendously in a procedure with an intellectual property office.

An embodiment of the procedure requesting system of the present invention has a feature in which a procedure request document preparing unit is included. The procedure request document preparing unit automatically prepares a document related to a procedure request to be presented to the agent based on information registered in the user information storage unit.

The feature can reduce the user's workload related to the procedure request to the agent. In particular, even a user unfamiliar with a request itself to an agent can easily make a procedure request.

An embodiment of the procedure requesting system of the present invention has a feature in which a predetermined input form is provided for registration to the user information storage unit, the procedure request document preparing unit conducts document preparation based on a content input in the input form, and a document prepared by the procedure request document preparing unit is presented to the agent via the procedure requesting means to make a procedure request.

The feature makes it easy for the user to input the information necessary for the registration without excess or deficiency by using the predetermined input form in registering the user's information. Furthermore, using the contents input in the input form, a procedure request from the preparation of the document to be presented to the agent to the document presentation is executed on the system side, thereby ensuring a reduction in the user's workload and enabling the agent side to reliably receive the procedure request in which the user's intent is appropriately reflected via the system side.

Moreover, the procedure requesting method of the present invention to solve the above-described problems is a procedure requesting method for a user who desires a procedure to request procedure by an agent in a procedure with an intellectual property office and has a feature in which the above-described procedure requesting system is used.

The feature allows the introduction of agents to a user and mediation of a procedure request by using the system including means by which a user makes a procedure request to an agent whose information is preliminarily registered.

This enables the user to make a procedure request to an agent who is registered in advance in the system in a procedure with an intellectual property office using the system where the information on the agents is preliminarily registered. As a result, the procedure request to an agent can be made much more easily than for the user to find an agent by him/herself and make a request. In particular, when the user him/herself does not have detailed knowledge of the procedure with intellectual property offices or when the user does not have a connection with a specific agent, the effects of the present invention are further exerted.

The program of the present invention to solve the above-described problems has a feature in which a function related to the above-described procedure requesting system is executed.

The feature allows smoothly operating the functions of the system including the means by which a user makes a procedure request to an agent whose information is preliminarily registered and allows the introduction of agents to a user and mediation of a procedure request.

This enables the user to make a procedure request to the agent who is registered in advance via the system operated by the program in a procedure with an intellectual property office. As a result, the procedure request to an agent can be made much more easily than for the user to find an agent by him/herself and make a request. In particular, when the user him/herself does not have detailed knowledge of the procedure with intellectual property offices or when the user does not have a connection with a specific agent, the effects of the present invention are further exerted.

### EFFECTS OF THE INVENTION

The present invention can provide a procedure requesting system, a procedure requesting method, and a program that allows a user who desires a procedure with an intellectual property office for filing an application for, registering, or maintaining rights to intellectual property to easily select an agent and make a procedure request.

### BRIEF DESCRIPTION OF THE DRAWINGS

Fig. 1 is a schematic explanatory view illustrating a configuration of a procedure requesting system according to a first embodiment of the present invention.
Fig. 2 is a flowchart illustrating a process for a procedure request to an agent using the procedure requesting system according to the first embodiment of the present invention.
Fig. 3 is a schematic explanatory view illustrating a configuration of a procedure requesting system according to a second embodiment of the present invention.
Fig. 4 is a schematic explanatory view illustrating a configuration of a procedure requesting system according to a third embodiment of the present invention.
Fig. 5 is a flowchart illustrating a process for a procedure request to an agent using the procedure requesting system according to the third embodiment of the present invention.
Fig. 6 is a schematic explanatory view illustrating a configuration of a procedure requesting system according to a fourth embodiment of the present invention.
Fig. 7 is a schematic explanatory view illustrating an exemplary user interface of the procedure requesting system of the present invention.

### DESCRIPTION OF PREFERRED EMBODIMENTS

The following describes embodiments of the procedure requesting system according to the present invention in detail with reference to the accompanied drawings. The description of the procedure requesting method and the program of the present invention is substituted by the following description of the configuration and operation of the procedure requesting system.

Note that the procedure requesting systems described in the embodiments are merely examples for describing the procedure requesting system according to the present invention, and the present invention is not limited thereto.

In the present invention, an "intellectual property office" means an agency that conducts an examination and grant registration of intellectual property (patent, utility model, trademark, and design) in each country. Examples include, for example, the Japan Patent Office (JPO) in Japan, the United States Patent and Trademark Office (USPTO) in the United States of America, the European Patent Office (EPO) and the European Union Intellectual Property Office (EUIPO) in Europe, the China National Intellectual Property Administration (CNIPA) in the People's Republic of China, and the Korean Intellectual Property Office (KIPO) in the Republic of Korea.

The procedure requesting system of the present invention is used as assistance for a procedure request in a procedure with an intellectual property office when a user who desires a procedure requests an agent to conduct the procedure instead of conducting the procedure by the user him/herself. Further, the procedure requesting system of the present invention is particularly preferably used when a user him/herself does not have detailed knowledge of the procedure with intellectual property offices or when the user does not have a connection with a specific agent.

A user using the procedure requesting system of the present invention may be any individual or organization as long as the user is the one who wants to file an application for, register, or maintain rights to intellectual property. Examples of the user include, for example, inventors, devisers, applicants (right holders) of intellectual property. In particular, by targeting at a user who does not usually conduct a procedure with an intellectual property office on a continuous basis and is unfamiliar with a process for such a procedure, the effects of the procedure requesting system of the present invention are further exerted.

While specific examples of the user include small-to-medium-sized enterprises and individuals for which the procedure with an intellectual property office and selection of an agent become large human and economic loads, the user is not limited to these. Other examples of the user include, for example, headquarters of a large-scale enterprise and group companies under the control of the large-scale enterprise.

Agents involved in the procedure requesting system of the present invention may be any individuals or organizations as long as the agents are those who have necessary and sufficient knowledge and authority related to a procedure with an intellectual property office. Examples of the agents include, for example, those who have licenses and may become agents (such as patent attorneys and attorneys) and firms to which the potential agents belong (such as patent firms and law firms). In particular, the agents in the present invention preferably include an agent who has authority that allows a procedure with an intellectual property office in a foreign country to the user. This ensures easily selecting an agent who has necessary authority and making a procedure request via the procedure requesting system of the present invention even when the user wants to acquire an intellectual property right outside his/her own country.

The procedure requesting system of the present invention is a procedure requesting system for a large indefinite number of users to use in common, not for use by a specific user. Note that the "large indefinite number of users" means a plurality of users who do not have a relationship to share information with one another.

### First Embodiment

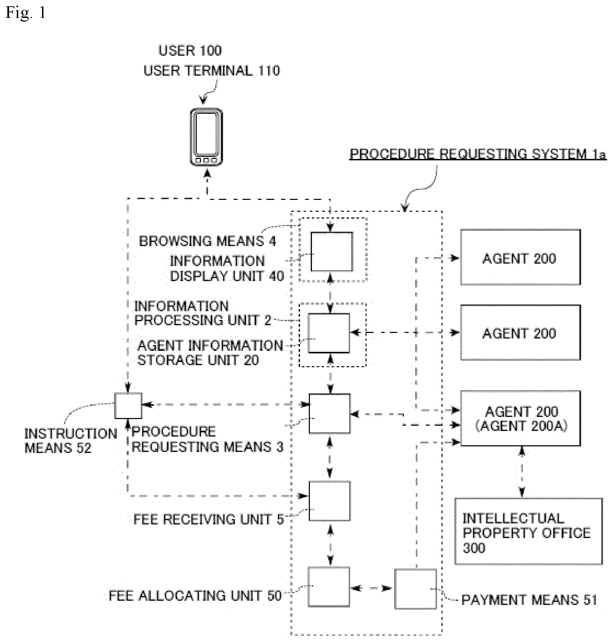

Fig. 1 is a schematic explanatory view illustrating a configuration of a procedure requesting system 1a according to the first embodiment of the present invention.

The procedure requesting system 1a according to the embodiment is a system for a user 100 who desires a procedure with an intellectual property office 300 to request the procedure by an agent 200. Fig. 1 illustrates the procedure requesting system 1a that includes an information processing unit 2, a procedure requesting means 3, a browsing means 4, and a fee receiving unit 5. The information processing unit 2 includes an agent information storage unit 20. The user 100 is connected to the procedure requesting system 1a by an information communicating means that enables them to mutually communicate information. The agents 200 are connected to the procedure requesting system 1a by an information communicating means that enables them to mutually communicate information. In Fig. 1, arrows indicated with a dash-dotted line indicate being connected in a manner that allows for control or input.

The procedure requesting system 1a according to the embodiment may be any system as long as the system executes functions related to respective units and respective means in the system. Examples of the procedure requesting system 1a include, for example, one constituted of a computing device including a CPU, a ROM, and a RAM, which is what is called a personal computer (PC), and a server.

The procedure requesting system 1a according to the embodiment can have a system administrator placed for dealing with system operations management and inquiries from the user 100.

In the embodiment, as illustrated in Fig. 1, while an example in which a single user 100 uses the procedure requesting system 1a is illustrated, a count of users 100 who use the procedure requesting system 1a is not particularly limited.

Further, in the embodiment, an example in which a single user 100 is associated with one case pertaining to intellectual property that requires a procedure with the intellectual property office 300 (hereinafter referred to simply as "case") is illustrated. However, the count of users 100 associated with cases is not particularly limited. For example, a plurality of users 100 may be associated with one case, or a single user 100 may be associated with a plurality of cases.

As a preferred example of the association between cases and the user 100, for example, only a single user 100 is associated with one case. This can clarify a person responsible for conducting case management, such as a procedure request for a case, on the user side.

As another example, for example, a plurality of users 100 are grouped to share information on one case. In particular, when right holders (users) involved in a case exist separately in a plurality of attributions, such as the headquarters of an enterprise and subsidiary companies, management related to the case can be more easily and appropriately conducted. At this time, it is preferred that one person responsible for conducting case management is decided among the users 100 in the group, and users 100 other than the responsible person are only allowed to browse a progress status related to the procedure for the case. This enables information sharing by a plurality of users 100 after clarifying decision-making and instruction systems related to the procedure for the case.

In the embodiment, the information communicating means between the user 100 and the procedure requesting system 1a is not particularly limited. For example, as illustrated in Fig. 1, the user 100 uses a user terminal 110, and the user terminal 110 is connected to the procedure requesting system 1a in a manner that allows for mutual input and output via a network line. As another example, for example, an input unit that inputs information to the procedure requesting system 1a itself is disposed, and the user 100 directly inputs information to the procedure requesting system 1a itself. As the information communicating means between the user 100 and the procedure requesting system 1a, it is preferred that the user 100 uses the user terminal 110 and is connected to the procedure requesting system 1a via a network line in view of convenience for the user 100.

The user terminal 110 according to the embodiment is operated on the user 100 side and used for information transmission with the procedure requesting system 1a. The user terminal 110 may be any terminal as long as the terminal has a configuration that allows for input and output via a network line, and examples include, for example, a PC, a smartphone, a tablet terminal, and the like connected to a network line.

In the embodiment, the information communicating means between the procedure requesting system 1a and the agents 200 is not particularly limited. However, it is preferred that the procedure requesting system 1a is connected to terminals of the agents 200 in a manner that allows for mutual input and output via network lines. This enables quick and reliable execution of information transmission between the procedure requesting system 1a and the agents 200.

An agent 200 receives a procedure request from the user 100 via the procedure requesting system 1a and conducts a procedure with the intellectual property office 300. In the embodiment, a description will be given by regarding the agent who receives a procedure request from the user 100 as an agent 200A.

At this time, for example, contents of the procedure by the agent 200A and a procedure means are dealt with as ordinary work contents as an agent according to demands of the user 100 and a case content. For example, when the procedure request from the user 100 is related to a patent application, examples of the contents of the procedure conducted by the agent 200A include, for example, preparation and format confirmation of a patent specification to be filed before the intellectual property office 300, submission of the patent specification to the intellectual property office 300, various correspondence up to a decision to grant registration or decision to refuse registration, calculation of a service charge to be paid to the intellectual property office 300, and payment of the service charge on behalf of the user 100. When the procedure request from the user 100 is related to a trademark application, examples of the contents of the procedure conducted by the agent 200A include, for example, preparation and format confirmation of a request for registering a trademark to be filed before the intellectual property office 300, submission of the request for registering a trademark to the intellectual property office 300, various correspondence up to a decision to grant registration or decision to refuse registration, calculation of a service charge to be paid to the intellectual property office 300, and payment of the service charge on behalf of the user 100.

As illustrated in Fig. 1, in the embodiment, information on the procedure for a case is not directly communicated between the user 100 and the intellectual property office 300. This ensures a reduction in workload on the user 100 side related to the procedure for a case and enables the user 100 to easily conduct case management even when the user 100 does not have detailed knowledge of a process and the like for the procedure with the intellectual property office 300.

Further, as illustrated in Fig. 1, in the embodiment, an example in which a procedure request is made to only one agent 200 (agent 200A) per case for which the user 100 desires a procedure with the intellectual property office 300 is illustrated. However, the present invention is not limited thereto. A description will be given of making procedure requests to a plurality of agents per case in another embodiment described later.

The following describes the respective units constituting the procedure requesting system 1a according to the embodiment based on Fig. 1.

The information processing unit 2 is a unit for conducting information processing, such as registering and organizing the information handled in the procedure requesting system 1a. The information processing unit 2 is preferably built to come under the control of a system administrator stationed for administering the entire procedure requesting system 1a and to permit access for input and output from the user 100 and the agents 200 by the authority of the system administrator.

As the information processing unit 2 according to the embodiment, for example, the agent information storage unit 20 is included.

In the agent information storage unit 20, information on the agents 200 is registered. The agent information storage unit 20 may be any unit as long as the unit can organize and store the information on the agents 200 as data in a state that allows for individual recognition and classification. More specifically, as the agent information storage unit 20, for example, a unit composed of a semiconductor memory element, such as ROM and RAM, or an HDD, is used.

As illustrated in Fig. 1, the agent information storage unit 20 is preferably a unit in which information on a plurality of agents 200 is registered. While the agents 200 have authority pertaining to overall procedures with the intellectual property office 300, generally, it is often the case that each agent 200 has a field mainly handled or a field of specialty. Note that the "field" in this context means, for example, one pertaining to the types of intellectual property rights, such as patent and trademark, or one pertaining to specific contents (technical field), such as patent application and trademark application.

Accordingly, the information on the plurality of agents 200 is registered in the agent information storage unit 20, thereby increasing options of the agents 200 to whom the user 100 can make a procedure request via the procedure requesting system 1a and ensures responding to various demands from the user 100.

Here, the information registered in the agent information storage unit 20 is utilized when the user 100 side who desires a procedure request for a case selects an agent 200 and makes a procedure request.

Accordingly, examples of the contents of the information on the agent 200 registered in the agent information storage unit 20 include contents pertaining to the information of the agent 200 him/herself, specific contents pertaining to a past track record and a field mainly handled (or field of specialty) as the agent 200, and contents pertaining to work contents and work capability as the agent 200, such as the name of a country where authority as the agent 200 is held. The contents pertaining to the information of the agent 200 him/herself include those pertaining to the name (individual name or corporate name) of the agent 200 and those pertaining to the point of contact of the agent 200, such as an address, telephone number, e-mail address, and ID in another communication contacting software of the agent 200.

Furthermore, examples of the information registered in the agent information storage unit 20 include information on the results aggregated on the system administrator side about the past track record of the agent 200 via the procedure requesting system 1a and on the evaluation for the agent 200 based on questionnaires from the user 100 who has actually made a procedure request. Utilizing this information ensures selecting a more appropriate agent 200 for the user 100 and making a procedure request.

The information on the agent 200 provided from the agent 200 him/herself or a third party (such as the system administrator and the user 100) other than the agent 200 is assigned with an agent control number for individual recognition and classification and registered in the agent information storage unit 20. At this time, the agent control number may be any number as long as the number does not duplicate those of other agents 200. The agent control number may be specified by the agent 200 side, or may be specified by the procedure requesting system 1a side. In order to appropriately handle the information on the agent 200, a password is preferably set in addition to the agent control number. Furthermore, to acquire an access right to the agent information storage unit 20 for the purpose of changing and deleting the information on the agent 200, the input of the password along with the agent control number is preferably required. This ensures taking measures to avoid information manipulation about the agent 200 by a third party other than the system administrator or the registered agent 200.

A means is not particularly limited for providing the information on the agent 200 to the agent information storage unit 20. Examples include, for example, inputting by the agent 200 him/herself the information on the agent 200 via the information communicating means between the agent 200 and the procedure requesting system 1a and inputting by the system administrator the information on the results aggregated on the system administrator side about the past track record of the agent 200 via the procedure requesting system 1a and on the evaluation for the agent 200 based on questionnaires from the user 100 who has actually made a procedure request. When the agent 200 him/herself inputs the information, an information providing means without interposing the information communicating means may be used. Examples of the information providing means include directly inputting to the procedure requesting system 1a and using an information providing means other than the network line to the procedure requesting system 1a side (such as telephone and mailing). However, in view of convenience for the agent 200 and promptness of information collection, the information on the agent 200 is preferably input via the information communicating means connecting the agent 200 to the procedure requesting system 1a.

The information on the agents 200 registered in the agent information storage unit 20 is preferably limited to information related to the agents 200 who obtain approval from the system administrator side that operates the procedure requesting system 1a. Here, examples of the "approval" from the system administrator side include concluding contracts between the system administrator and the agents 200 and checking the agents 200 with reference to criteria set up on the system administrator side to grant consent and permission only to the agents 200 who fulfill the criteria. This allows guaranteeing the identity and work capability of the agents 200 to be introduced to the user 100 by the procedure requesting system 1a and ensures the building of a certain trust relationship between the user 100 and the agent 200 who have not been particularly acquainted with one another until then.

The procedure requesting means 3 is a means by which the user 100 makes a procedure request for a case to the agent 200 registered in the agent information storage unit 20.

The procedure requesting means 3 may be any means as long as the means ensures making a procedure request to an appropriate agent 200A from among the agents 200 registered in the agent information storage unit 20 for a case for which the user 100 desires a procedure with the intellectual property office 300

Here, the procedure request to the agent 200A may be a request including notification about the contents of a case for which a procedure is requested, in addition to a request itself for taking over a procedure about a case. At this time, the contents of a case notified are not particularly limited. For example, the contents include contents based on a document prepared as a patent specification and a request for registering a trademark on the user 100 side (the document itself) and contents at a concept and idea level related to intellectual property.

The procedure request to the agent 200A via the procedure requesting means 3 may be a request including work of selecting the agent 200A from among a plurality of agents 200 or may be a request not including the work. More specifically, for example, the user 100 him/herself may proactively get involved in the selection of the agent 200A and a procedure request, or while the user 100 may mainly determine whether or not to make a procedure request, the procedure requesting system 1a side may be proactive in selecting the agent 200A and making the procedure request.

As the procedure requesting means 3 in the procedure requesting system 1a of the embodiment, an example in which the user 100 him/herself proactively gets involved in the selection of the agent 200A and a procedure request will be described.

The procedure requesting means 3 according to the embodiment is a means by which the user 100 him/herself selects the agent 200A from among the agents 200 registered in the agent information storage unit 20 and issues a procedure request.

The procedure requesting means 3 may be any means as long as the means allows instructions pertaining to the selection of the agent 200A and a procedure request notified from the user 100 to be sent and received as instruction signals. Examples include, for example, an electric circuit or input/output unit that transmits an electrical signal to the CPU in a personal computer or server, and those including a converting means that converts the request from the user 100 into an instruction signal, and the like.

As illustrated in Fig. 1, the procedure requesting means 3 is connected to the agent information storage unit 20 in the information processing unit 2 in a manner that allows for input and output and also connected to the user terminal 110 of the user 100 in a manner that allows for input and output. Although not illustrated in Fig. 1, the procedure requesting means 3 is also connected to the agent 200 in a manner that allows for input and output. This allows the instructions pertaining to the selection of the agent 200A and a procedure request notified from the user 100 via the user terminal 110 to be input to the procedure requesting means 3 as instruction signals. Further, the procedure requesting means 3 ensures sending the instruction pertaining to a procedure request to the point of contact of the agent 200A selected by referring to the information registered in the agent information storage unit 20 based on the instruction from the user 100.

The procedure requesting system 1a according to the embodiment may be any system as long as the system includes a means for preliminarily registering the information on the agents 200 (the agent information storage unit 20 in the information processing unit 2) and a means by which the user 100 makes a procedure request to the agent 200A (procedure requesting means 3). This allows the introduction of agents to the user 100 and mediation of a procedure request.

Using the procedure requesting system 1a allows the user 100 who desires a procedure for a case with the intellectual property office 300 for filing an application for, registering, or maintaining rights to intellectual property to easily make a procedure request to the agent 200A.

In the procedure requesting means 3 of the embodiment, a means by which the user 100 selects the agent 200A to whom a procedure request for a case is made from among the agents 200 is not particularly limited.

For example, when the user 100 knows that the agent, with whom the user 100 is already acquainted or has a request track record, is registered as an agent 200 in the agent information storage unit 20 according to the embodiment, the user 100 can select the agent 200A and make a procedure request via the procedure requesting means 3.

This allows the user 100 to proceed with work related to the procedure request for a case to the agent 200A only by an easy operation of issuing an instruction to the procedure requesting system 1a side. Additionally, work in which the user 100 him/herself communicates with the agent 200A regarding the procedure request for a case after confirming the point of contact of the agent 200A (for example, work using a contacting means, such as a telephone or e-mail function) needs not be conducted, ensuring a reduction in labor involved in the case management by the user 100.

On the other hand, in cases, such as a case where the user 100 does not have a connection with a specific agent, the user 100 him/herself selects an appropriate agent 200A who fits the demands of the user 100 from among a plurality of agents 200 and makes a procedure request.

Therefore, in the procedure requesting system 1a according to the embodiment, an information providing means is preferably disposed for providing the information necessary for the user 100 him/herself to select the agent 200A to whom a procedure request for a case is made from among the plurality of agents 200.

As one example of the information providing means is, as illustrated in Fig. 1, the browsing means 4 is disposed.

The browsing means 4 is a means by which the user 100 browses the information on the agents 200 registered in the agent information storage unit 20.

As the browsing means 4, as illustrated in Fig. 1, for example, an information display unit 40 is disposed. The information display unit 40 is connected to the agent information storage unit 20 in a manner that allows for input and output.

The information display unit 40 may be any unit as long as the unit can display the information on the agents 200, and examples include a display screen, such as a display, application software related to displaying, and the like. The contents displayed on the information display unit 40 are preferably displayed similarly on the user terminal 110 side. This allows sharing the information on the procedure requesting system 1a side and the user 100 side, enabling the user 100 to quickly and easily make a decision on the selection of the agent 200A and a procedure request.

When information is displayed on the information display unit 40, it is preferred that searching based on the control number assigned in the agent information storage unit 20 and the type of information registered in the agent information storage unit 20 and displaying the search result are enabled. In particular, when the user terminal 110 is used on the user 100 side to display the information displayed on the information display unit 40, it is more preferred that searching and displaying the search result are enabled on the user terminal 110 side. This allows the user 100 him/herself to appropriately and easily select the agent 200A who fulfills the demands from the user 100 side.

Then, a procedure request for a case is made to the agent 200A selected based on the browsing means 4 via the procedure requesting means 3.

In Fig. 1, an example in which the procedure requesting means 3 and the browsing means 4 are disposed as separate bodies is illustrated. However, the present invention is not limited thereto. For example, the functions related to the procedure requesting means 3 and the browsing means 4 may be integrated. More specifically, for example, a procedure request to the agent 200A selected by the user 100 based on the information on the agents 200 displayed on the information display unit 40 in the browsing means 4 is made on the information display unit 40 via the user terminal 110. This enables the user 100 to easily and reliably notify an instruction pertaining to a procedure request to the agent 200A. In particular, even when the user 100 does not have detailed knowledge of a process for a procedure request to the agent 200A, a procedure request can be executed by a simple operation.

Another example of the information providing means other than the browsing means 4 is that the user 100 notifies the procedure requesting system 1a side of a request for providing information on the selection of the agent 200A via the user terminal 110. At this time, for example, the user 100 makes a notification using the network line connecting between the user terminal 110 and the procedure requesting system 1a. More specifically, for example, a request for providing information for the selection of the agent 200A is notified from the user terminal 110 to the procedure requesting system 1a side using any application software that can be used as a communication contacting means including an e-mail and a short message service (SMS).

At this time, measures are preferably taken on the procedure requesting system 1a by, for example, disposing a receiving unit that receives a notification on the request for providing information from the user 100 and providing the information on agent candidates to the user 100. One example of the measures is, for example, that in view of the contents of the request for providing information from the user 100, agent candidates who fit the demands of the user 100 are presented from among the registered agents 200, and agent candidates who fulfill a certain standard, such as the agents 200 to whom procedure requests are frequently made in the procedure requesting system 1a, are presented. This can reduce a workload of the user 100 in the selection of the agent 200A. In particular, the effects of the present invention are further exerted on the user 100 who has less experience, knowledge, and the like in a point that by what sort of criteria the agent 200A should be selected.

The receiving unit disposed on the procedure requesting system 1a side may be a unit that receives notifications on various inquiries from the user 100. In the procedure requesting system 1a, a responding means may be disposed for responding according to the contents of the notification received by the receiving unit. This enables the user 100, who is unfamiliar with the use of a system itself, overall procedures related to a case pertaining to intellectual property, in addition to a procedure request to an agent, to use the procedure requesting system 1a with a sense of security.

When the procedure requesting system 1a according to the embodiment is operated to mediate a procedure request to the agent 200A by the user 100,a procedure with the intellectual property office 300, a procedure request to the agent 200A, and a system operation by the system administrator incur respective predetermined fees (hereinafter referred to collectively as "various fees").

Accordingly, in the procedure requesting system 1a according to the embodiment, a fee collecting means for collecting the various fees is preferably disposed to pay for the respective fees.

As the fee collecting means, for example, the fee receiving unit 5 is disposed.

The fee receiving unit 5 is a unit for receiving the various fees from the user 100.

The fee receiving unit 5 may be any unit as long as the unit receives payment made by the user 100 and allows the procedure requesting system 1a side to confirm the payment made, and examples include, for example, a bank account of the system administrator who operates the procedure requesting system 1a or an organization to which the system administrator belongs. In particular, from a perspective of easy confirmation related to the payment made, an online account that allows tracking money payment and reception history on the Internet is preferred.

Among the various fees received by the fee receiving unit 5, a fee for a procedure with the intellectual property office 300 (office fee), which is a fee for a procedure for a case, and a service charge pertaining to a procedure request to the agent 200A are fees paid by the user 100, which are determined according to the status of a case for which the user 100 makes a procedure request to the agent 200A and the number of claims or the number of classifications of a case.

While the user 100 may directly pay the respective fees to the intellectual property office 300 and the agent 200A, the user 100 preferably pays the amount combined as the various fees to the fee receiving unit 5 according to the embodiment. This enables the user 100 to reduce a load of the work related to the payment of the various fees.

When the user 100 directly pay the fees to the intellectual property office 300 and the agent 200A, it is preferred that the user 100 and the agent 200A provide the information on the payment to the procedure requesting system 1a side, and the information on the payment (such as, the payment amount and the number of payments) is recorded in the fee receiving unit 5 or the procedure requesting means 3. This also ensures confirmation on receipt of the various fees also on the procedure requesting system 1a side.

In the fee receiving unit 5, other than the fees for a procedure for a case (the office fee and the service charge), a system use fee is preferably received from the user 100. This allows the user 100 to pay the fee for a procedure for a case and the charge for the usage of the procedure requesting system 1a in one payment and allows the procedure requesting system 1a side to operate the procedure requesting system 1a stably by receiving the system use fee along with the fee for the procedure for a case. The system use fee may be received from the user, may be received from the agent, or may be received from both.

Here, the system use fee is a fee equivalent to an expense related to the operation of the procedure requesting system 1a and a charge different from compensation to a specialist, such as a service charge paid to the agent 200A. Accordingly, the system use fee is preferably set to be lower in price than the service charge paid to the agent 200A. The amount of the system use fee is preferably presented to the user 100 from the procedure requesting system 1a side to obtain consensus from both.

The system use fee may be a fixed amount per month or per request and may decrease or increase in amount within a certain period after the usage of the procedure requesting system 1a starts and according to the number of cases using the system and the number of usage.

A paying means for paying the various fees to the fee receiving unit 5 from the user 100 side is not particularly limited. Examples include, for example, a payment using a credit card of a debit card under the name of the user 100, a payment through a wire transfer using a bank account, and the like. In particular, from a perspective of simplicity of payment and receipt, paying with a credit card and the like is preferred. Further, a paying means from the user 100 side may be preliminarily registered in the procedure requesting system 1a side, and a predetermined amount of the various fees may be paid based on an instruction of the user 100. For example, card information on a credit card or a debit card under the name of the user 100 is registered in the procedure requesting system 1a side, and the various fees are debited using the card information on the procedure requesting system 1a side when the user 100 issues an instruction pertaining to the payment.

The amount of the various fees may be calculated by the user 100 him/herself or may be presented to the user 100 from the procedure requesting system 1a side or the agent 200A side. In particular, the amount to be paid to the fee receiving unit 5 by the user 100 is preferably presented by the procedure requesting system 1a side as a combined total of the various fees. This reduces the workload related to the payment of the various fees because the user 100 only needs to perform the work for paying the presented amount.

The procedure requesting means 3 of the procedure requesting system of the present invention may include a function for the user 100 to request the agent or the system administrator to issue a quotation of the fee for a procedure for a case (the office fee and the service charge) and the system use fee. The request for issuing the quotation may be made to a plurality of agents.

When the fee for a procedure for a case and the system use fee are received from the user 100 in a lump sum as the various fees, the various fees need to be distributed into the system use fee that the procedure requesting system 1a side should collect and the fee for the procedure for a case that the agent 200A side should collect, which need to be received by the procedure requesting system 1a side and the agent 200A side, respectively.

In view of this, as illustrated in Fig. 1, a fee allocating unit 50 that allocates the various fees received from the user 100 to the system usage fee and the amount equivalent to payment to an agent (the fee for a procedure for a case) is preferably disposed to the fee receiving unit 5 according to the embodiment. Furthermore, a payment means 51 that sends the amount equivalent to payment to an agent to the agent 200Ais preferably disposed.

The fee allocating unit 50 may be any unit as long as the unit can allocate the various fees received from the user 100 to the system usage fee and the amount equivalent to payment to an agent (the fee for a procedure for a case). Examples include, for example, a unit that has a computing function and communicates the amount obtained by subtracting the system use fee from the amount of the various fees received from the user 100 as the amount equivalent to payment to an agent to the agent 200A or the payment means 51. The agent 200A receives the information on the amount equivalent to payment, thereby allowing the determination of an amount billed to the system administrator.

The payment means 51 may be any means as long as the means allows the amount communicated as the amount equivalent to payment to an agent from the fee allocating unit 50 to be sent to the agent 200A who receives a procedure request from the user 100. Examples include, for example, a wire transfer through an account specified by the agent 200A and sending payment according to a payment method specified by the agent 200A.

This allows the procedure requesting system 1a side to receive a necessary expense more reliably, allowing a more stable operation of the system. Further, since billing and collecting the necessary expense are taken over by the procedure requesting system 1a side on behalf of the agent 200A, the agent 200A side can reduce the workload related to the agent work and smoothly conduct the procedure for a case.

As illustrated in Fig. 1, it is preferred that the fee receiving unit 5 is connected to the procedure requesting means 3 in a manner that allows for input and output, and after payment of the necessary various fees is made to the fee receiving unit 5 from the user 100, and receipt is confirmed in the fee receiving unit 5, a procedure request via the procedure requesting means 3 by the user 100 is executed. This ensures a stable operation of the procedure requesting system 1a and facilitation of the agent work without the procedure requesting system 1a side or the agent 200A side taking care of payment for the various fees.

Furthermore, as illustrated in Fig. 1, an instruction means 52 by which payment for the various fees to the fee receiving unit 5 by the user 100 and a procedure request to the agent 200A are instructed in one operation is preferably included.

Examples of the instruction means 52 include, for example, a means that is connected to the fee receiving unit 5 and the procedure requesting means 3 in a manner that allows for input and output and by which instruction signals can be sent to the fee receiving unit 5 and the procedure requesting means 3 in one operation. Here, the "one operation" means that a command for transmitting the instruction signals to two places (the fee receiving unit 5 and the procedure requesting means 3) is completed in one motion. More specific examples include clicking or tapping an icon to issue a command for transmitting the instruction signals, switchover of a switch, pressing down a button, and the like.

Another example of the instruction means 52 is a means that is connected or integrated with the user terminal 110 and by which an instruction is issued from the user terminal 110.

This enables the user 100 to complete a procedure request to the agent 200A through an easy operation. Moreover, this can reduce the workload of the user 100 him/herself tremendously in a procedure for a case with the intellectual property office 300.

A means for executing functions in the respective units and the respective means of the procedure requesting system 1a is not particularly limited. Examples include, for example, preliminarily configuring a program for executing the functions of the respective units and the respective means to automate the operations in the respective units and the respective means, in addition to conducting operations and determinations by humans, such as the system administrator. In particular, a necessary program is preferably created for a series of operations after the instruction pertaining to a procedure request for a case is issued from the user 100 to the procedure requesting means 3 and executed by a processor, such as CPU. One example of the operations for creating a program is, for example, operations involved in a process performed after the instruction pertaining to the procedure request for a case is issued to the procedure requesting means 3 from the user 100, until the operation related to sending payment to the agent 200A from the fee receiving unit 5 are executed and the procedure request to the agent 200A is completed. This enables a quick and accurate work about the procedure request from the user 100 to the agent 200A.

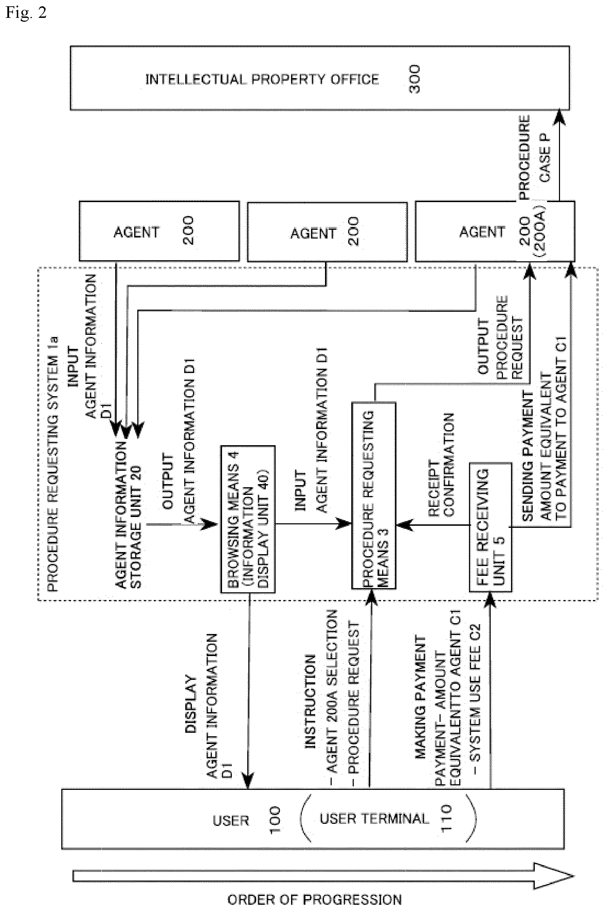

Fig. 2 is a flowchart illustrating a process for a procedure request to an agent using the procedure requesting system 1a according to the first embodiment of the present invention. A flow pertaining to the main order of progression is illustrated from the upper side of Fig. 2 toward the lower side, and arrows in Fig. 2 indicate specific process flows.

A procedure request using the procedure requesting system 1a according to the embodiment will be described with reference to Fig. 2.

First, the system administrator in the procedure requesting system 1a grants approval to the agents 200 to be registered in the procedure requesting system 1a. Afterwards, the agents 200 or the system administrator inputs information on the agents 200 (agent information D1) to the procedure requesting system 1a. The input agent information D1 is stored and registered in the agent information storage unit 20.

At this time, the agent information D1 stored in the agent information storage unit 20 is output to the information display unit 40 of the browsing means 4 and displayed to the user 100 or the system administrator.

Next, the user 100 selects an agent 200A who fits the demands of the user 100 from among the agents 200 based on the agent information D1 browsed via the information display unit 40 of the browsing means 4 or the user terminal 110 and notifies the procedure requesting system 1a side of an instruction of a procedure request to the agent 200A via the procedure requesting means 3.

Further, the user 100 makes payment of an amount obtained by combining an amount equivalent to payment to an agent C1 as a fee for a procedure for a case and an amount equivalent to system usage fee C2 to the procedure requesting system 1a side.

At this time, an instruction to the procedure requesting means 3 and an instruction pertaining to making payment to the fee receiving unit 5 may be conducted in one operation by the instruction means 52.

Then, after receipt is confirmed in the fee receiving unit 5, the procedure request to the agent 200A notified by the procedure requesting means 3 is executed. At this time, payment of the amount equivalent to payment to an agent C1 received by the fee receiving unit 5 is sent to the agent 200A.

The agent 200A to whom the procedure request is issued executes a procedure for a case P with the intellectual property office 300 based on the procedure request from the user 100.

By going through the above-described process using the procedure requesting system 1a according to the embodiment, the user 100 can complete a procedure request for a case with the intellectual property office 300 only through work such as the selection of an agent who fits the demands from among the agents whose information is preliminarily registered (omittable), an instruction of the procedure request for the case to the selected agent, and making payment.

As described above, the procedure requesting system 1a according to the embodiment allows the introduction of agents to a user and mediation of a procedure request by including a means by which a user makes a procedure request to an agent whose information is preliminarily registered.

This enables the user to select an agent who fits the demands of the user from among the agents registered in advance via the procedure requesting system 1a and make a procedure request in a procedure with an intellectual property office. As a result, the procedure request to an agent can be made much more easily than for the user to find an agent by him/herself and make a request. In particular, when the user him/herself does not have detailed knowledge of the procedure with intellectual property offices or when the user does not have a connection with a specific agent, the effects of the present invention are further exerted.

### Second Embodiment

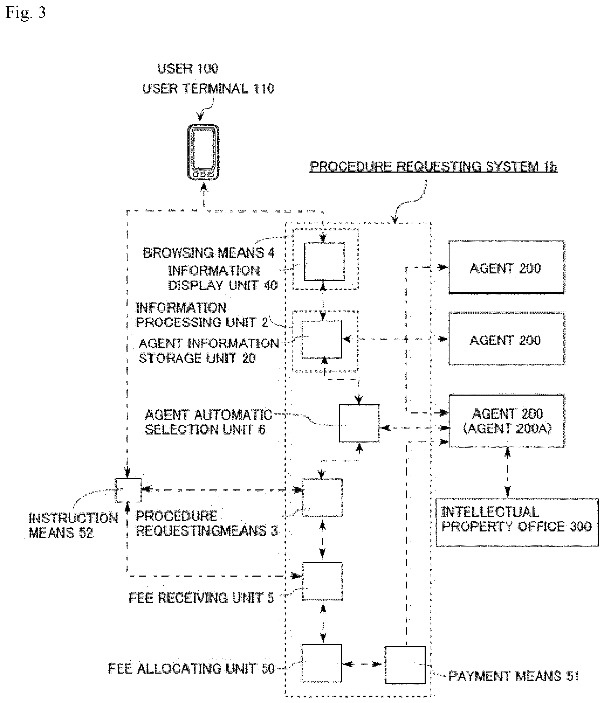

Fig. 3 is a schematic explanatory view illustrating a configuration of a procedure requesting system 1b according to the second embodiment of the present invention.

As illustrated in Fig. 3, the procedure requesting system 1b according to the second embodiment is a system in which an agent automatic selection unit 6 is further disposed in the procedure requesting system 1a according to the first embodiment. The agent automatic selection unit 6 automatically selects an agent 200A from among the agents 200 registered in the agent information storage unit 20. Note that the description for those having an identical configuration to those in the first embodiment is omitted.

By including the agent automatic selection unit 6 in the procedure requesting system 1b of the embodiment, about the selection of the agent 200A and a procedure request via the procedure requesting means 3, the user 100 only determines whether or not to notify a procedure request content and make the procedure request, and the procedure requesting system 1b side is proactive in selecting the agent 200A and making the procedure request. This can reduce a workload of the user 100 in the selection of an agent. In particular, the effects of the present invention are further exerted on the user 100 who has less experience, knowledge, and the like in a point that by what sort of criteria the agent 200A should be selected.

As illustrated in Fig. 3, the browsing means 4 may also be disposed in the procedure requesting system 1b. At this time, a use purpose of the browsing means 4 is different from that of the first embodiment, and for example, the browsing means 4 is used for the user 100 to confirm the information on the agent 200A selected by the agent automatic selection unit 6.

The agent automatic selection unit 6 is a unit for automatically selecting the agent 200A from among the agents 200 registered in the agent information storage unit 20. More specifically, the agent automatic selection unit 6 is a unit for automatically selecting an appropriate agent 200A based on the procedure request content of the user 100 via the procedure requesting means 3 and the information on the agents 200 registered in the agent information storage unit 20. For example, when the procedure request content of the user 100 is a procedure for a patent application and the technical field pertaining to the contents of the patent application is related to a mechanical field, an agent 200, whose field mainly handled as the agent 200 is registered as patent applications and the mechanical field in the information on the agent 200, is selected as the agent 200A. Note that for the agent automatically selected, not only a single agent but also a plurality of agents may be cited as candidates.

The agent automatic selection unit 6 may be any unit as long as the unit can extract and input conditions required for computing out of the procedure request content of the user 100 and the information on the agents 200 and execute computing, and examples include, for example, a computing device connected to the agent information storage unit 20 and the procedure requesting means 3 in a manner that allows for mutual input and output. In particular, a unit that can organize and compute enormous data and a unit that includes a learning function based on the computing result (such as machine learning and deep machine learning (deep learning)) are preferred. Accordingly, the agent automatic selection unit 6 according to the embodiment is particularly preferably a computing device related to artificial intelligence (AI) including a learning function.

Types of the information on the agents 200 used by the agent automatic selection unit 6 are not particularly limited. For example, as described above, examples include the information on the fields mainly handled by the agents 200 and the information on past request track records of the agents 200 and evaluation for the agents 200 as the information that are directly relevant to the procedure request content of the user 100. Each piece of information assigned with priority order (weighting) may be used as the information used by the agent automatic selection unit 6.

A means for executing functions in the respective units and the respective means of the procedure requesting system 1b is not particularly limited. Similarly to the above-described first embodiment, examples include, for example, preliminarily configuring a program for executing the functions of the respective units and the respective means to automate the operations in the respective units and the respective means, in addition to conducting operations and determinations by humans, such as the system administrator. In particular, a necessary program is preferably created for operations related to a series of process for the selection of the agent 200A by the agent automatic selection unit 6 and a procedure request, in addition to operations related to a series of process until the operation related to sending payment to the agent 200A from the fee receiving unit 5 after an instruction pertaining to a procedure request for a case is issued from the user 100 to the procedure requesting means 3 and executed by a processor, such as CPU. This enables a quick and accurate work about the procedure request from the user 100 to the agent 200A.

When a computing device related to artificial intelligence (AI) is used as the agent automatic selection unit 6, high computing power is utilized. Therefore, computing other than the automatic selection of the agent 200A may be conducted. For example, information on the procedure request content of the user 100 and results related to the procedures with the intellectual property office 300 by the agent 200Ais used to determine a possibility for right acquisition pertaining to an intellectual property right for a case for which the user 100 makes a procedure request and notify the user 100 and the agent 200A of the determination result. In particular, when the case for which the user 100 makes a procedure request is related to a trademark application, extraction of the information used for computing and the computing itself are relatively easy. Therefore, it is expected that the possibility for the acquisition of a right can be determined with high accuracy. Based on the determination result, the user 100 and the agent 200A may deal with the procedure with the intellectual property office 300. This enables efficient case management and case processing for the user 100 and the agent 200A.

As described above, by including an agent automatic selection unit that automatically selects an agent from among the agents registered in the agent information storage unit, the procedure requesting system 1b according to the embodiment enables the system side to automatically select an appropriate agent without the user him/herself directly selecting an agent, therefore ensuring a reduction in the user's workload related to the selection of an agent. In particular, even a user unfamiliar with a request itself to an agent can easily make a procedure request.

### Third Embodiment

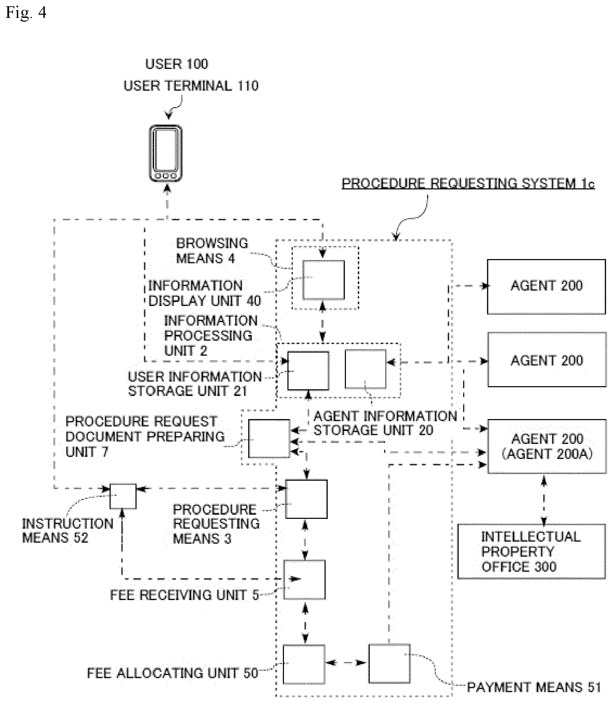

Fig. 4 is a schematic explanatory view illustrating a configuration of a procedure requesting system 1c according to the third embodiment of the present invention.

As illustrated in Fig. 4, the procedure requesting system 1c according to the third embodiment is a system in which a user information storage unit 21 is further included in the information processing unit 2 of the procedure requesting system 1a according to the first embodiment. In the user information storage unit 21, information on the user 100 is registered. The procedure requesting system 1c according to the embodiment includes a procedure request document preparing unit 7. The procedure request document preparing unit 7 automatically prepares a document related to a procedure request to be presented to the agent 200 using the information registered in the user information storage unit 21. Note that the description for those having an identical configuration to those in the first embodiment is omitted.

In the user information storage unit 21, information on the user 100 is registered. This ensures the building of a trust relationship between the user 100 and the procedure requesting system 1c side.

The user information storage unit 21 may be any unit as long as the unit can organize and store the information on the user 100 as data in a state that allows for individual recognition and classification. More specifically, as the user information storage unit 21, for example, similarly to the agent information storage unit 20, a unit composed of a semiconductor memory element, such as ROM and RAM, or an HDD, is used. The configurations of the agent information storage unit 20 and the user information storage unit 21 may be integrally included or may be included as separate bodies. In the embodiment, the agent information storage unit 20 and the user information storage unit 21 are preferably integrated in the information processing unit 2 to organize and store the information on the user 100 and the information on the agents 200. This offers advantages in that the procedure requesting system 1c can save space and the handling involved in organization and linkage of each piece of information is facilitated.

Here, one example of the information on the user 100 registered in the user information storage unit 21 is information for specifying the user 100 him/herself. More specifically, the information includes, for example, contents pertaining to the personal information of the user 100 him/herself and contents pertaining to a means for making payment. The contents pertaining to the personal information of the user 100 him/herself include those pertaining to the full name of user 100, such as the name and the place of employment of the user 100, and those pertaining to the point of contact of the user 100, such as an address, telephone number, e-mail address, and ID in another communication contacting software of the user 100. The contents pertaining to the means for making payment include the credit card number, debit card number, bank account number, and the like used for making payment from the user 100 to the procedure requesting system 1c. In particular, the user 100 registered in the user information storage unit 21 is preferably a person who can decide the determination on and response to a procedure request for a case as a person responsible for cases of the user 100. This allows smoothly conducting information transmission between the system administrator on the procedure requesting system 1c side or the agent 200A side and the user 100 side, and the work related to the procedure request for a case.

Another example of the information on the user 100 registered in the user information storage unit 21 is information on a case of the registered user 100. One example of such information is, for example, predetermined information for specifying a case for intellectual property which the user 100 wants to file an application for, register, or maintain rights to. More specifically, for example, when a case for intellectual property is a patent, the information includes names and addresses of the inventor and applicant (right holder), the title of the invention, and various numbers for specifying the case including numbers assigned from an intellectual property office, such as an application number, a patent application laid-open disclosure number, and a registration number, and a control number on the user 100 side.

The information also includes, for example, information on the status of a case (such as patent pending, after the request for examination, and registered) and information on the contents of a case (such as specific contents, keywords, and technical field).

Inputting the registered information on a case of the user improves convenience for the user, therefore allowing promotion of continuous usage of the procedure requesting system of the present invention. Since this suppresses transactions outside the system between the agent and the user, the effect of allowing the system administrator to obtain the system usage fee more reliably is provided.

Furthermore, another example of the information on the user 100 registered in the user information storage unit 21 is information on the demands of the user 100 for the procedure for a case. More specifically, the information includes a time limit for the procedure for a case (including a specific date setting and a due date setting, such as within how many days) and demands related to handling of the case. At this time, the information may be input from the user 100 side by entering words freely. However, from a perspective of a reduction in labor involved in information registration (input) on the user 100 side and facilitation of the handling involved in organization and linkage of the information on the procedure requesting system 1c side, it is preferred that options are preliminarily established on the procedure requesting system 1c side and the user 100 side is allowed to select and input the options.

Inputting the time limit for the procedure for a case improves convenience for the user, therefore allowing promotion of continuous usage of the procedure requesting system of the present invention. Since this suppresses transactions outside the system between the agent and the user, the effect of allowing the system administrator to obtain the system usage fee more reliably is provided.

The information on the user 100 provided from the user 100 is preferably assigned with a user control number for individual recognition and classification and registered in the user information storage unit 21. At this time, the user control number may be any number as long as the number does not duplicate those of other users 100. The user control number may be specified by the user 100 side, or may be specified by the procedure requesting system 1c side. In order to appropriately handle the information on the user 100, a password is preferably set in addition to the user control number to register the information on the user 100 in the user information storage unit 21.

A means is not particularly limited for providing the information on the user 100 to the user information storage unit 21 from the user 100. Examples include, for example, inputting the information on the user 100 to the procedure requesting system 1c via the user terminal 110 by the user 100 and notifying the procedure requesting system 1c side of the information on the user 100 by the user 100 without interposing the user terminal 110. Examples of the information providing means without interposing the user terminal 110 include directly inputting to the procedure requesting system 1c and using an information providing means (such as telephone and mail) other than a network line to the procedure requesting system 1c side. However, in view of convenience for the user 100 and promptness of a procedure, the information on the user 100 is preferably input via the user terminal 110.

A specific example of the means for providing the information on the user 100 via the user terminal 110 from the user 100 is exemplified. As an example, first, a predetermined input form is set up on the procedure requesting system 1c side so that a format of the information on the user 100 becomes an appropriate shape for data registration into the user information storage unit 21. Then, the set input form is presented to the user 100 side via the user terminal 110. After the user 100 fills in the input form, the input form is transmitted to the procedure requesting system 1c side. This makes it easy for the user 100 to input necessary information without excess or deficiency during the registration to the procedure requesting system 1c about the information on the user 100.

Note that the user 100 may freely enter words in the input form. However, as an example, a selection method by a pull-down menu or an input method that allows for multiple replies by options with checkboxes provided is employed. This reduces the labor involved in the information registration (input) on the user 100 side and facilitates the handling involved in organization and linkage of the information on the procedure requesting system 1c side.

Another example is that the user 100 transmits the information necessary for the registration to the procedure requesting system 1c side via the user terminal 110 as necessary, and the procedure requesting system 1c side that receives the information registers the data in the user information storage unit 21. This ensures appropriately dealing with to a case where the user 100 him/herself is unfamiliar with the input using the user terminal 110 and a case where the user 100 wants to request a minor correction and the like from the procedure requesting system 1c side.

Another example of the information on the user 100 registered in the user information storage unit 21 is information on deliverables from an agent. Saving the deliverables from an agent (such as a notification from an intellectual property office) in the user information storage unit allows the agent to make a delivery and report via the procedure requesting system of the present invention. The procedure requesting system of the present invention allows the agent to make delivery procedure work more efficient. A means (not Illustrated) is not particularly limited for delivering the information on the user 100 to the user information storage unit 21 from the agent 200 and can be conducted similarly to the means for providing the information on the user 100 from the user 100.

The information registered in the user information storage unit 21 is basically handled so that only the registered user 100 him/herself and the system administrator can have access to the information for browsing, changing, correcting, and the like. However, when the user 100 completes a procedure request to the agent 200A, the agent 200A side may be permitted to browse, change, and correct the information on the user 100 by the authority of the system administrator. The agent 200A side obtains the information on the user 100, thereby ensuring the building of a trust relationship between the agent 200A side and the user 100 in proceeding with the procedure for a case. This enables the agent 200A side to smoothly proceed with the work related to the procedure.

The procedure requesting system of the present invention may include a function that grants authority to browse, change, and correct all or part of the information registered in the user information storage unit 21 to a third party other than the agent (such as another agent) by the permission of the user 100. For example, when a user in Japan requests an agent in China to file an application and further requests progress management of the application filed in China from an agent in Japan, the information on the case can be shared by regarding the agent in Japan as a third party.

The procedure request document preparing unit 7 is a means for automatically preparing a document related to a procedure request to be presented to an agent based on the information registered in the user information storage unit 21.

When a procedure request for a case is made to the agent 200A, originally, the user 100 side needs to present or explain to the agent 200A the information of the user 100 him/herself, the contents of a case for which a procedure request is desired, demands related to the handling of the case, and the like. However, this becomes a workload for the user 100. In particular, the presentation and explanation themselves of the information and demands to the agent 200A, in addition to the work related to the selection and detailed examination of the information that should be presented to the agent 200A, become a large workload for a user 100 unfamiliar with a procedure request to the agent 200A.

Therefore, an example of the procedure request document preparing unit 7 is a unit that automatically prepares a procedure request document to the agent 200A by automatically selecting the information that should be presented to the agent 200A (including the information of the user 100 him/herself, the contents of a case for which a procedure request is desired, demands related to the handling of the case, and the like) based on the information registered in the user information storage unit 21 and automatically inputting items necessary for the presentation or explanation of the information to the agent 200A. This substantially reduces the burden on the user 100 side and enables the preparation of the procedure request document in which the intent of the user 100 is appropriately reflected.

A specific device configuration is not particularly limited for executing automatic preparation of a procedure request document in the procedure request document preparing unit 7.

For example, a document format of the procedure request document is not particularly limited. The contents of the document format related to the procedure request document may be preliminarily configured on the procedure requesting system 1c side and used in a single uniform manner, or the contents of the document format related to the procedure request document may be configured for each agent 200 in accordance with a request of the agent 200 side. In the latter, it is preferred that the contents of the document format related to the procedure request document are associated with the agents 200 and stored on the procedure requesting system 1c side, and based on the selection result of the agent 200A from the user 100 input via the procedure requesting means 3, the document format of the procedure request document in accordance with the agent 200A can be retrieved in the procedure request document preparing unit 7.

As an example of automatic input of the procedure request document, for example, the procedure request document is linked with data of the information registered in the user information storage unit 21 so that the registered information is transcribed as necessary items to the document format of the procedure request document. At this time, the data format and/or a format of the procedure request document or the information may be converted as necessary. This decreases an inputting process via human hands, such as the user 100 side or the system administrator of the procedure requesting system 1c, as much as possible, thereby ensuring a reduction in improper description, such as an entry error, of the procedure request document.

Further, for the procedure request document automatically prepared by the procedure request document preparing unit 7, a checking means may be disposed for checking the contents of the procedure request document for improper description and the like. As the checking means, application software that conducts document proofreading and revision may be used, and examples include a means in which a checking process by the user 100 and the system administrator on the procedure requesting system 1c side is disposed. This further suppresses the generation of inadequacies in the procedure request document and ensures smoothly proceeding with the procedure request to the agent 200A.

The procedure request document prepared by the procedure request document preparing unit 7 is presented to the agent 200A. A presenting means of the procedure request document to the agent 200A is not particularly limited.

For example, the procedure request document is sent to the agent 200A side using an information communicating means from the procedure requesting system 1c side. At this time, a form of the procedure request document sent to the agent 200A side is not particularly limited, and the form may be a printed matter or may be digital data. For example, when the procedure request document is a printed matter, it is sent to the agent 200A side through mail. Further, for example, when the procedure request document is digital data, it is sent to the agent 200A side through a network line.

Another example is that a document storing unit that stores and posts the procedure request document is disposed in the procedure requesting system 1c, and by accessing the document storing unit from the agent 200A side, the procedure request document is presented to the agent 200A side. At this time, by forming the procedure request document as digital data and configuring the document storing unit as one that allows access limitation, such as a server placed under the control of the system administrator, a measure can be taken to avoid leakage of the contents of the procedure request document, that is, the information on a case of the user 100 to the outside other than the user 100, the agent 200A, or the procedure requesting system 1c.

A means for executing functions in the respective units and the respective means of the procedure requesting system 1c is not particularly limited. Similarly to the above-described first embodiment, examples include, for example, preliminarily configuring a program for executing the functions of the respective units and the respective means to automate the operations in the respective units and the respective means, in addition to conducting operations and determinations by humans, such as the system administrator. In particular, a necessary program is preferably created for operations related to a series of process for the document preparation and presentation by the procedure request document preparing unit 7, in addition to operations related to a series of process until the operation for sending payment to the agent 200A from the fee receiving unit 5 after an instruction pertaining to a procedure request for a case is issued from the user 100 to the procedure requesting means 3 and executed by a processor, such as CPU. This enables a quick and accurate work about the procedure request from the user 100 to the agent 200A.

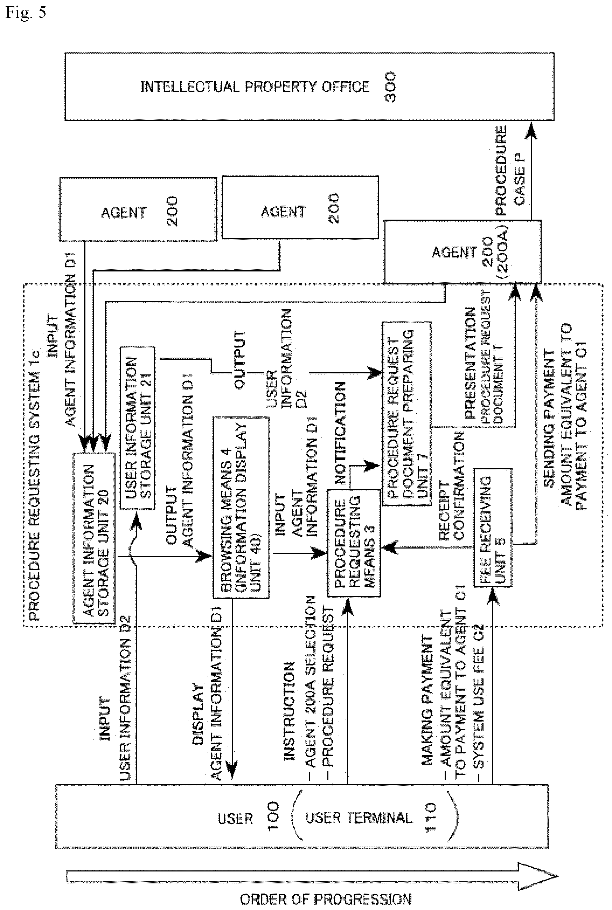

Fig. 5 is a flowchart illustrating a process for a procedure request to an agent using the procedure requesting system 1c according to the third embodiment of the present invention. A flow pertaining to the main order of progression is illustrated from the upper side of Fig. 5 toward the lower side, and arrows in Fig. 5 indicate specific process flows.

A procedure request using the procedure requesting system 1c according to the embodiment will be described with reference to Fig. 5.

First, the system administrator in the procedure requesting system 1a grants approval to the agents 200 to be registered in the procedure requesting system 1a. Afterwards, the agents 200 input information on the agents 200 (agent information D1) to the procedure requesting system 1a. The input agent information D1 is stored and registered in the agent information storage unit 20.

At this time, the agent information D1 stored in the agent information storage unit 20 is output to the information display unit 40 of the browsing means 4 and displayed to the user 100 or the system administrator.

Meanwhile, the user 100 inputs information on the user 100 (user information D2) to the procedure requesting system 1a. The input user information D2 is stored and registered in the user information storage unit 21.

Next, the user 100 selects an agent 200A who fits the demands of the user 100 from among the agents 200 based on the agent information D1 browsed via the information display unit 40 of the browsing means 4 or the user terminal 110 and notifies the procedure requesting system 1a side of an instruction of a procedure request to the agent 200A via the procedure requesting means 3.

Further, the user 100 makes payment of an amount obtained by combining an amount equivalent to payment to an agent C1 as a fee for a procedure for a case and an amount equivalent to system usage fee C2 to the procedure requesting system 1a side.

At this time, an instruction to the procedure requesting means 3 and an instruction pertaining to making payment to the fee receiving unit 5 may be conducted in one operation by the instruction means 52.

In addition, having notified the instruction of the procedure request via the procedure requesting means 3 from the user 100 is input to the procedure request document preparing unit 7. Upon receiving the instruction of the procedure request from the user 100, the procedure request document preparing unit 7 prepares a document T related to the procedure request to be presented to the agent 200A based on the user information D2 registered in the user information storage unit 21.

Then, after receipt is confirmed in the fee receiving unit 5, the document T prepared by the procedure request document preparing unit 7 is presented to the agent 200A notified by the procedure requesting means 3. This executes the procedure request to the agent 200A. At this time, payment of the amount equivalent to payment to an agent C1 received by the fee receiving unit 5 is sent to the agent 200A.

The agent 200A to whom the procedure request is issued executes a procedure for a case P with the intellectual property office 300 based on the procedure request described in the document T related to the procedure request presented from the user 100 side.

By going through the above-described process using the procedure requesting system 1c according to the embodiment, the user 100 can make a procedure request in which the demands of the user 100 are appropriately reflected to the agent 200A through work such as advance registration of the user information, the selection of an agent who fits the demands from among the agents whose information is preliminarily registered (omittable), an instruction of the procedure request for the case to the selected agent, and making payment.

As described above, the procedure requesting system 1c according to the embodiment ensures the building of a trust relationship between a user and a system administration side by registering the information on the user. This ensures a stable system operation for the system administration side.

Further, the procedure requesting system 1c according to the embodiment ensures a reduction in the user's workload related to a procedure request to an agent by providing a means for automatically preparing a procedure request document to the agent using the information on the user. In particular, even a user unfamiliar with a request itself to an agent can easily make a procedure request.

Furthermore, the procedure requesting system 1c according to the embodiment makes it easy for the user to input the information necessary for the registration to the procedure requesting system 1c without excess or deficiency by presenting an input form when the information on the user is registered. Moreover, using the contents input in the input form, a procedure request from the preparation of the document to be presented to the agent to the document presentation is executed on the system side, thereby ensuring a reduction in the user's workload and enabling the agent side to reliably receive the procedure request in which the user's intent is appropriately reflected via the system side.

### Fourth Embodiment

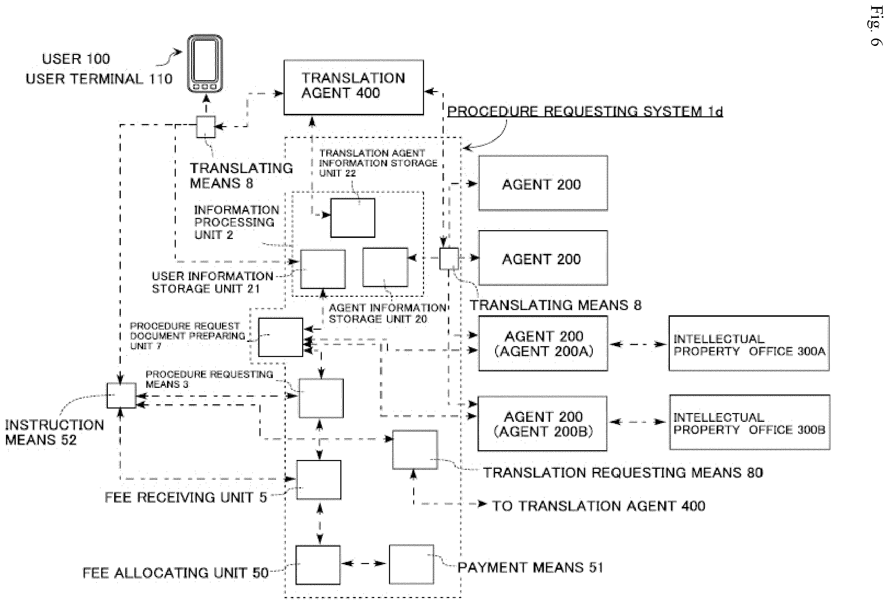

Fig. 6 is a schematic explanatory view illustrating a configuration of a procedure requesting system 1d according to the fourth embodiment of the present invention.

As illustrated in Fig. 6, the procedure requesting system 1d according to the fourth embodiment is a system in which a translating means 8 are further included in the procedure requesting system 1c according to the third embodiment. The translating means 8 is a means for supporting a plurality of languages in the registration and display of the information related to the agent information storage unit 20 and the user information storage unit 21.

Note that the description for those having an identical configuration to those in the third embodiment is omitted. In Fig. 6, a configuration for the browsing means 4 and a configuration for the connection from the payment means 51 to the agents 200 (dash-dotted line) are not illustrated.

Procedures for cases that the user 100 desires are not limited to procedures with a domestic intellectual property office 300. That is, when the user 100 desires a procedure with an intellectual property office in another country to the user 100, the user 100 needs to make a request to the agent 200 who has authority that allows a procedure with the foreign intellectual property office.

For example, when the user 100 desires procedures for a case with foreign intellectual property offices to the user 100 (intellectual property offices 300A and 300B in Fig. 6), as illustrated in Fig. 6, using the procedure requesting system 1d according to the embodiment, the user 100 makes a procedure request for a case to each of the agent 200A and an agent 200B via the procedure requesting means 3. The agent 200A has authority that allows a procedure with the intellectual property office 300A, and the agent 200B has authority that allows a procedure with the intellectual property office 300B. The agents 200A and 200B execute procedures for the case of the user 100 with the intellectual property offices 300A and 300B that have authority pertaining to the procedures for the case, respectively.

At this time, when the language mainly used or language understandable by the user 100 differs from those by the agents 200, it becomes difficult to conduct appropriate information transmission for the procedure requests. In particular, when the user 100 desires procedures with intellectual property offices in a plurality of countries, it becomes further difficult to conduct appropriate information transmission for the procedure requests between all the agents 200 in the respective countries and the user 100.

The procedure requesting system 1d according to the embodiment includes the translating means 8 for supporting a plurality of languages, thereby enabling information input and information collection based on the languages understandable by the user 100 and the agent 200 in each country in the registration and display of the information used for the information transmission for a procedure request. This allows a user to understand the information of an agent and easily make a procedure request even when the language mainly used or language understandable by the user 100 does not coincide with that by the agent 200. Further, the agent side can receive a request from a foreign user and appropriately respond to the request.

The translating means 8 according to the embodiment may be any means, as long as the means allows supporting a plurality of languages in the registration and display of the information related to the agent information storage unit 20 and the user information storage unit 21 in the information processing unit 2, and is not particularly limited.

Here, examples of "supporting a plurality of languages" include indicating the plurality of languages together in the registration and display of the information, making the language used for the registration and display of the information switchable by the user 100 side or the agent 200 side, and the like.

As one example of the translating means 8, as illustrated in Fig. 6, for example, the translating means 8 is disposed on an information communicating means from the user 100 side to the procedure requesting system 1d and on an information communicating means from the agents 200 side to the procedure requesting system 1d to translate the information input from the user 100 side and the agents 200 side to the procedure requesting system 1d into a plurality of languages.

At this time, specific examples of the translating means 8 include, for example, using application software that translates input information into a plurality of languages through machine translation and carrying out translation by a translation agent who has knowledge about intellectual property rights.

Here, the information registered in the agent information storage unit 20 and the user information storage unit 21 include highly specialized contents. In view of this, as the translating means 8, translation is preferably carried out by a translation agent who has sufficient translation skills.

Accordingly, as one of the specific examples of the translating means 8 according to the embodiment, as illustrated in Fig. 6, a translation agent information storage unit 22 and a translation requesting means 80 are included. In the translation agent information storage unit 22, information on translation agent 400 is registered. By the translation requesting means 80, the user 100 browses the information of the translation agents 400 registered in the translation agent storage unit 22, makes a selection, and requests a translation.

The translation agent information storage unit 22 may be any unit as long as the unit can organize and store the information on the translation agents 400 as data in a state that allows for individual recognition and classification. More specifically, as the translation agent information storage unit 22, for example, similarly to the agent information storage unit 20 and the user information storage unit 21, a unit composed of a semiconductor memory element, such as ROM and RAM, or an HDD, is used. The configuration of the translation agent information storage unit 22 may be integrally included with the configurations of the agent information storage unit 20 and the user information storage unit 21 or may be included as a separate body. In the embodiment, it is preferred that the translation agent information storage unit 22 is disposed in the information processing unit 2 and integrated with the agent information storage unit 20 and the user information storage unit 21 to organize and store the information on the translation agents 400 together with the information on the user 100 and the information on the agents 200. This offers advantages in that the procedure requesting system 1d can save space and the handling involved in organization and linkage of each piece of information is facilitated.

Here, the information registered in the translation agent information storage unit 22 is utilized when the user 100 side who desires translation of the information related to a procedure request selects the translation agent 400 and makes a translation request.

Accordingly, examples of the contents of the information on the translation agent 400 registered in the translation agent information storage unit 22 include contents pertaining to the information of the translation agent 400 him/herself, specific contents pertaining to a past track record and a language mainly handled (or language of specialty) as the translation agent 400, and contents pertaining to work contents and work capability as the translation agent 400. The contents pertaining to the information of the translation agent 400 him/herself include those pertaining to the name (individual name or corporate name) of the translation agent 400 and those pertaining to the point of contact of the translation agent 400, such as an address, telephone number, e-mail address, and ID in another communication contacting software of the translation agent 400.

Furthermore, examples of the information registered in the translation agent information storage unit 22 include information on the results aggregated on the system administrator side about the past track record of the translation agent 400 via the procedure requesting system 1d and on the evaluation for the translation agent 400 based on questionnaires from the user 100 who has actually made a translation request. Utilizing this information ensures selecting a more appropriate translation agent 400 for the user 100 and making a translation request.

The information on the translation agent 400 provided from the translation agent 400 him/herself or a third party (such as the system administrator and the user 100) other than the translation agent 400 is assigned with a translation agent control number for individual recognition and classification and registered in the translation agent information storage unit 22. At this time, the translation agent control number may be any number as long as the number does not duplicate those of other translation agents 400. The translation agent control number may be specified by the translation agent 400 side, or may be specified by the procedure requesting system 1d side. In order to appropriately handle the information on the translation agent 400, a password is preferably set in addition to the translation agent control number. Furthermore, to acquire an access right to the translation agent information storage unit 22 for the purpose of changing and deleting the information on the translation agent 400, the input of the password along with the translation agent control number is preferably required. This ensures taking measures to avoid information manipulation about the translation agent 400 by a third party other than the system administrator or the registered translation agent 400.

A means is not particularly limited for providing the information on the translation agent 400 to the translation agent information storage unit 22. Examples include, for example, inputting by the translation agent 400 him/herself the information on the agent 200 via the information communicating means between the translation agent 400 and the procedure requesting system 1d and inputting by the system administrator the information on the results aggregated on the system administrator side about the past track record of the agent 200 via the procedure requesting system 1d and on the evaluation for the agent 200 based on questionnaires from the user 100 who has actually made a procedure request. When the agent 200 him/herself inputs the information, an information providing means without interposing the information communicating means may be used. Examples of the information providing means include directly inputting to the procedure requesting system 1d and using an information providing means other than the network line to the procedure requesting system 1d side (such as telephone and mailing). However, in view of convenience for the translation agent 400 and promptness of information collection, the information on the translation agent 400 is preferably input via the information communicating means connecting the translation agent 400 to the procedure requesting system 1d.

The information on the translation agents 400 registered in the translation agent information storage unit 22 is preferably limited to information related to the translation agents 400 who obtain approval from the system administrator side that operates the procedure requesting system 1d. Here, examples of the "approval" from the system administrator side include concluding contracts between the system administrator and the translation agents 400 and checking the translation agents 400 with reference to criteria set up on the system administrator side to grant consent and permission only to the translation agents 400 who fulfill the criteria. This allows guaranteeing the identity and work capability of the translation agents 400 to be introduced to the user 100 by the procedure requesting system 1d and ensures the building of a certain trust relationship between the user 100 and the translation agent 400 who have not been particularly acquainted with one another until then.

The translation requesting means 80 is a means by which the user 100 makes a translation request of the information on a procedure request to the translation agent 400 registered in the translation agent information storage unit 22.

The translation requesting means 80 may be any means as long as the means ensures making a translation request to an appropriate translation agent 400 from among the translation agents 400 registered in the translation agent information storage unit 22 for the information on a procedure request.

Here, the translation request to the translation agent 400 via the translation requesting means 80 may be a request including work of selecting the translation agent 400 from among a plurality of translation agents 400 or may be a request not including the work. More specifically, for example, the user 100 him/herself may proactively get involved in the selection of the translation agent 400 and a translation request, or while the user 100 may mainly determine whether or not to make a translation request, the procedure requesting system 1d side may be proactive in selecting the translation agent 400 and making the translation request.

An example of a specific means pertaining to the selection of the translation agent 400 and a translation request is one equivalent to the above-described means for the selection of the agent 200 and a procedure request.

For example, examples of the means by which the user 100 him/herself proactively gets involved include browsing the information in the translation agent information storage unit 22 to select the translation agent 400 and make a translation request based on the browsed information, and receiving the information provided from the procedure requesting system 1d side to select the translation agent 400 and make a translation request based on the contents of the information. On the other hand, examples of the means by which the procedure requesting system 1d side proactively gets involved include providing a computing unit that conducts computing based on the contents of a case for which the user 100 requests translation and the information on the translation agents 400 in the procedure requesting system 1d to automatically select the translation agent 400 based on the computing result and make a translation request.

As described above, the procedure requesting system 1d according to the embodiment includes a translating means, thereby allowing a user to understand information of an agent and easily make a procedure request even when the user desires acquisition of an intellectual property right outside the user's own country and the language mainly used or language understandable by the user does not coincide with that by the agent. Further, the agent side can receive a request from a foreign user and appropriately respond to the request. In particular, even when the user desires procedures with intellectual property offices in a plurality of countries and make procedure requests to a plurality of agents, the procedure requests can be easily made.

Additionally, the procedure requesting system 1d according to the embodiment includes a means for registering translation agent information to conduct translation by a translation agent as the translating means and making a translation request, thereby enabling the user to select the translation agent who conducts translation based on the registered information and make a translation request. This ensures selecting a translation agent and making a request more easily than for the user him/herself to find a translation agent who has necessary and sufficient ability for a procedure with an intellectual property office.

### Example of User Interface

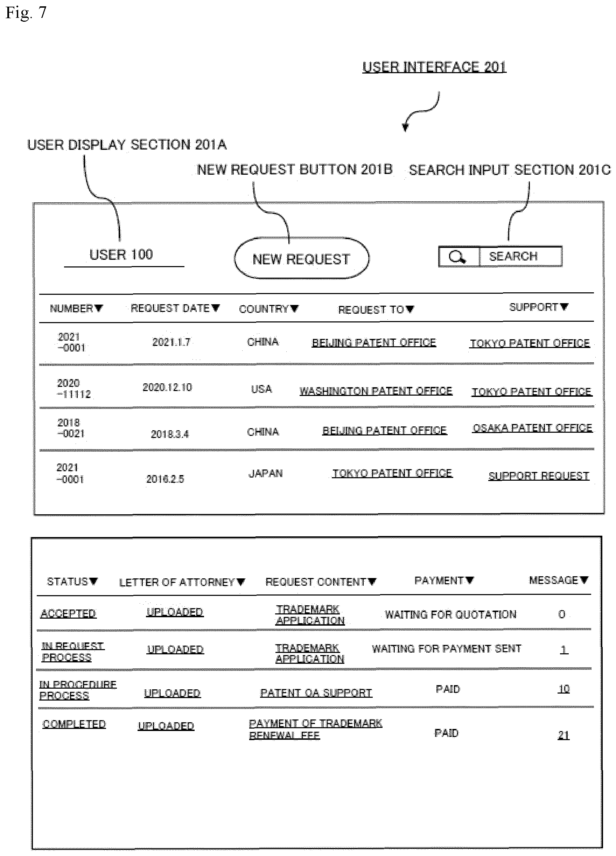

Fig. 7 is a schematic explanatory view illustrating an exemplary user interface in the procedure requesting system of the present invention. Note that the schematic explanatory view illustrated in Fig. 7 is an image of a screen of the user terminal 110, such as a PC. As illustrated in Fig. 7, a user interface 201 includes a user display section 201A indicating that it is a screen used by the user 100, a new request button 201B for making a new request, and a search input section 201C for searching information kept by the user 100. Further, a list of information on cases in a request process or cases for which a request is completed is displayed on the user interface 201.

The new request button 201B is a button for requesting a procedure by an agent. By clicking the new request button 201B, the screen moves to a screen to input necessary items to a procedure request sheet T. A part of the items to be input to the procedure request sheet T can be automatically input by the procedure request document preparing unit 7. Based on the procedure request sheet T, a request for issuing a quotation may be made to a single or a plurality of agents.

For example, items displayed in the list of the case information include, but are not limited to, the following items.
"Number": The column for displaying a reference number, application number, or the like.
"Request date": The column for displaying the date when the user 100 made a request to an agent.
"Country": The column for displaying a country or a region where a procedure is conducted.
"Request to": The column for displaying an agent who conducts a procedure. For example, when the name of an agent is clicked, information on the agent is displayed.
"Support": The column for displaying a third party who manages progress of a case and the like. For example, when the name of a third party is clicked, information on the third party is displayed.
"Status": The column for displaying a status of a procedure request. For example, when a column of the status is clicked, the history of documents delivered or received between the user 100 and an agent is displayed chronologically.
"Letter of attorney": The column for displaying whether or not a certificate for delegating representation of a procedure by the user is saved. For example, when a column of the letter of attorney is clicked, a letter of attorney is displayed.
"Request content": The column for displaying a request content. For example, when a request content is clicked, details of the request content are displayed.
"Payment": The column for displaying a status of payment of various fees from the user.
"Message": The column for displaying the number of messages between the user and an agent. For example, when a number is clicked, the history of messages is displayed.
A function may be disposed for indicating that the messages are updated by, for example, changing the color when a new message is registered. Furthermore, a function may be disposed for notifying the other party that the messages are updated when a new message is registered.

Note that the above-described embodiments illustrate exemplary procedure requesting systems. The procedure requesting system according to the present invention is not limited to the above-described embodiments, and the procedure requesting systems according to the above-described embodiments may be modified in a range in which the gist described in the claims is not changed.

For example, in the procedure requesting systems of the embodiments, when information is handled between a user side and the procedure requesting system side or between an agent side and the procedure requesting system side, in addition to using a publicly-known or general-purpose technique, specialized application software may be used. For example, application software specialized for communication contacting is prepared on the procedure requesting system side as a communication contacting means other than a publicly-known or general-purpose communication contacting means, such as an e-mail and SMS, and information input from the user side and the agent side to the procedure requesting system side and notification from the procedure requesting system side to the user side and the agent side are all conducted via the specialized application software. This facilitates the organization and utilization of the information and ensures maintaining high confidentiality at the procedure requesting system side.

### INDUSTRIAL APPLICABILITY

The procedure requesting system, the procedure requesting method, and the program of the present invention are usable for a person who desires a procedure with an intellectual property office to request an agent to take over the procedure. In particular, the procedure requesting system, the procedure requesting method, and the program are preferably usable when a person who does not have detailed knowledge of a procedure with an intellectual property office or a person unfamiliar with a procedure request to an agent, such as a person who does not have connection with a specific agent, requests a procedure with an intellectual property office from an agent.

### DESCRIPTION OF REFERENCE SIGNS

- 1a, 1b, 1c, 1d: Procedure requesting systems
- 2: Information processing unit
- 20: Agent information storage unit
- 21: User information storage unit
- 22: Translation agent information storage unit
- 3: Procedure requesting means
- 4: Browsing means
- 40: Information display unit
- 5: Fee receiving unit
- 50: Fee allocating unit
- 51: Payment means
- 52: Instruction means
- 6: Agent automatic selection unit
- 7: Procedure request document preparing unit
- 8: Translating means
- 80: Translation requesting means
- 100: User
- 110: User terminal
- 200, 200A, 200B: Agents
- 201: User interface
- 201A: User display section
- 201B: New request button
- 201C: Search input section
- 300, 300A, 300B: Intellectual property offices
- 400: Translation agent
- C1: Amount equivalent to payment to an agent
- C2: System use fee
- D1: Agent information
- D2: User information
- P: Case
- T: Document

## Claims

1. A procedure requesting system for a user who desires a procedure to request a procedure by an agent in a procedure with an intellectual property office, the procedure requesting system comprising:
an information processing unit that includes an agent information storage unit in which information on an agent is registered; and
procedure requesting means by which the user requests a procedure by an agent registered in the agent information storage unit.

2. The procedure requesting system according to claim 1, wherein
the information processing unit includes a user information storage unit in which information on the user is registered.

3. The procedure requesting system according to claim 1, comprising
browsing means by which the user browses agent information registered in the agent information storage unit.

4. The procedure requesting system according to claim 1, wherein
information registered in the agent information storage unit includes information on evaluation for the agent.

5. The procedure requesting system according to claim 1, comprising
an agent automatic selection unit that automatically selects an agent from among agents registered in the agent information storage unit, wherein
the agent automatic selection unit selects an appropriate agent based on a procedure request content of the user via the procedure requesting means and information on agents registered in the agent information storage unit.

6. The procedure requesting system according to claim 1, wherein
the agent has an authority that allows a procedure with an intellectual property office in a foreign country to the user.

7. The procedure requesting system according to claim 1, wherein
the information processing unit includes translating means for supporting a plurality of languages in registration and display of information.

8. The procedure requesting system according to claim 7, wherein
the translating means includes:
a translation agent information storage unit in which information on a translation agent is registered; and
translation requesting means by which the user browses information on a translation agent registered in the translation agent storage unit, makes a selection, and requests a translation.

9. The procedure requesting system according to claim 8, wherein
information registered in the translation agent information storage unit includes information on evaluation for the translation agent.

10. The procedure requesting system according to claim 1, comprising
a fee receiving unit that receives various fees from the user, wherein
the procedure requesting means executes a procedure request made by the user after the fee receiving unit receives various fees.

11. The procedure requesting system according to claim 10, wherein
the fee receiving unit includes:
a fee allocating unit that allocates various fees received from the user to a system usage fee and an amount equivalent to payment to the agent to whom the procedure requesting means makes a request; and
payment means by which the amount equivalent to payment is sent to the agent.

12. The procedure requesting system according to claim 10, comprising
instruction means by which payment for various fees to the fee receiving unit and a procedure request to the agent by the user are instructed in one operation.

13. The procedure requesting system according to claim 2, comprising
a procedure request document preparing unit that automatically prepares a document related to a procedure request to be presented to the agent based on information registered in the user information storage unit.

14. The procedure requesting system according to claim 13, wherein
a predetermined input form is provided for registration to the user information storage unit,
the procedure request document preparing unit conducts document preparation based on a content input in the input form, and
a document prepared by the procedure request document preparing unit is presented to the agent via the procedure requesting means to make a procedure request.

15. A procedure requesting method for a user who desires a procedure to request a procedure by an agent in a procedure with an intellectual property office, wherein
the procedure requesting system according to any one of claims 1 to 14 is used.

16. A program for executing a function related to the procedure requesting system according to any one of claims 1 to 14.
